# EUROPEAN PATENT SPECIFICATION

(11) **EP 2 041 975 B1**
(45) Date of publication and mention of the grant of the patent: **06.01.2016**
(21) Application number: 07805053.1
(22) Date of filing: 04.07.2007
(51) Int. Cl.: H04N 21/41, H04N 21/414, H04N 21/43, H04N 21/438, H04N 21/643

(54) **METHOD FOR CONTROLLING A RECEIVER SYSTEM AND RECEIVER SYSTEM, IN PARTICULAR FOR WIRELESS IP DATACAST NETWORKS**
VERFAHREN ZUR STEUERUNG EINES EMPFÄNGERSYSTEMS UND EMPFÄNGERSYSTEM, INSBESONDERE FÜR DRAHTLOSE IP-DATACAST-NETZWERKE
PROCÉDÉ DE RÉGLAGE D'UN SYSTÈME RÉCEPTEUR, ET SYSTÈME RÉCEPTEUR DESTINÉ EN PARTICULIER À DES RÉSEAUX DE DIFFUSION DE DONNÉES IP SANS FIL

(30) Priority: 04.07.2006 EP 06116549
(43) Date of publication of application: 01.04.2009
(73) Proprietor: NXP B.V., 5656 AG Eindhoven (NL)
(72) Inventor: AUE, Volker, A-1102 Vienna (AT)
(74) Representative: Krott, Michel
(86) International application number: PCT/IB2007/052610
(87) International publication number: WO 2008/004193

(56) References cited:
- WO-A-03/075494
- US-A1- 2006 291 386
- US-B1- 6 665 751

## Description

Method for controlling a receiver system and receiver system, in particular for wireless IP datacast networks

The present invention relates to a method for controlling a receiver system and to a receiver system, in particular for wireless IP ("Internet Protocol") datacast networks, the receiver system comprising a receiver component with an antenna, and a host component with a player unit having a buffer.

The invention is in particular applicable for digital video broadcasting for handheld appliances (in the following denoted as DVB-H). DVB-H is a standard for bringing digital television content to mobile handheld devices. It is based on the standard for digital video broadcasting for terrestrial transmission (in the following denoted as DVB-T) and the IP datacasting mode thereof. The benefit for mobile devices comes from the introduction of time slicing that allows a receiver only to listen into the DVB-T stream for the data that are of interest to it. Time slicing is enabled by intelligently grouping MPEG ("Moving Picture Experts Group") transport stream packets. The MPEG transport packet stream is the interface to the physical layer. In DVB-H, packets that belong to a certain IP data stream are grouped consecutively to form bursts. Time splicing information is included in every burst to notify the receiver about the relative time from the current burst to the transmission of the next burst. The receiver then can set an appropriate timer and switch off the receiver between bursts thereby reducing its on-time by more than 90% and saving a great deal of power consumption. Alternatively, the receiver can use this time interval to scan different channels to enable a seamless handover to network cells offering a better signal strength, in particular during movements of the receiver.

WO 03/075494 discloses a DVB-based time slicing broadcasting system comprising a receiver that is capable of adapting to changes in transmission times and to various sizes of transmission bursts.

US 6 665 751 B1 discloses a media player capable of dynamically changing its playback rate according to network conditions in order to compensate for delayed packets.

One of the key features of a digital TV broadcast system for mobile devices are the provisions for hand-over to allow for disrupted services when on the move. The DVB-H standard allows for so called synchronous frequency networks (also denoted as SFN). A synchronous frequency network synchronously broadcasts the same content from different transmitters on the same frequency. At the receiver, signals received from multiple sides are seen as multipath signals and are accommodated for by the built-in equalizer. A synchronous frequency network may be advantageous for operators that have limited spectrum, e.g., a license to operate at just one channel, i.e. frequency. The first drawback, however, is that receivers cannot cope well with Doppler when the signal has been subject to heavy multipath as it appears in synchronous frequency networks. The second drawback is that operators cannot vary the content, as it may be desired for offering location-dependent services. Another possibility of providing undisrupted handover is to phase-shift the transport streams provided to different transmitters operating at different frequencies if such are available to one operator. In phase shifting, bursts that contain a specific IP flow are slightly shifted in time between adjacent frequencies.

A difficulty in receiving mobile digital TV is to recover clocks. In a simple bi-directional connection, where pre-recorded content resides on a server, a player that possesses its own clock can control the server playing speed for an audio/video stream (denoted as A/V stream). However, when it comes to broadcasting the receiver cannot influence the play speed of the transmitter anymore, as this would affect other listening receivers. Therefore, the receiver and the corresponding source decoder must somehow recover the clock of the source encoder in order to prevent the player's internal buffers from running empty when the source decoder clock is too fast, or from overflowing when the source decoder clock is too slow. The adjustment of the source decoder clock is typically done implicitly by interpolating or decimating the A/V stream at the source decoder side. Noting that the clock difference between source encoder and decoder vary by a few ten parts per million (ppm) or at most by a few hundred ppm, adjustment is typically done in its simplest form by every-so-often doubling or dropping a frame.

Specific transmissions protocols and interface standards such as MPEG-TS or IEEE 1394 ensures quality of service for multimedia content. Those standards have specific requirements on latencies and jitter, i.e. variations on transfer delay, of the packets; and ensure that the arrival time of the packets is related to some timestamp information inside. In the HiperLAN/2 home extension optimized for A/V content delivery standard, a hardwired signal was introduced in order to deliver timing information to an A/V source decoder. With those mechanisms, an A/V source decoder can easily recover the clock rate of the transmitter.

For simple IP based transmission where latencies cannot be ensured, the only means for an A/V source decoder to recover the clock rate is to buffer some incoming packets to accommodate the jitter and to monitor the buffer level to adjust its internal clocks. This mechanism is similar to a delay lock loop.

The main disadvantages of bursting are the discontinuous data transmission and the latencies introduced by such a system, especially in the context of fast channel switching also referred to as zapping and in handover situations between two or more network cells. The burst behaviour of the incoming packets makes it extremely difficult to implement an accurate clock recovery mechanism at the receiver side. With burst periods in the scope of seconds, as used in DVB-H, a clock recovery algorithm comes at the expense of a larger buffer and/or at the expense of stability meaning a large variation of the play speed up to a point, where those variations can be notified by the viewer/listener.

The larger the buffer the higher the overall latency is which is especially undesirable for channel switching. However, the receive buffer in the player needs to be sufficiently large to buffer an entire burst. An additional safety margin needs to be kept to prevent the buffer from running empty, which would result in a pause in the audio and/or video contents. Under normal circumstances this has to be avoided.

For fast channel switching, it is desirable that the player starts playing as soon as the burst has been received. For this purpose, the player has to find a synchronization point in the A/V multiplex, typically a so-called I-frame. However, if the player starts too early, there is a risk that the buffer is empty before the next burst is received.

For MPEG transport stream phase shifting based handovers as discussed above, the buffer needs to be enlarged to additionally accommodate MPEG transport stream phase shifts. Contrarily, for fast channel switching it is desirable to dimension the buffer as small as possible, since each filling of the buffer adds to the overall delay from pressing a button to showing the actual content. A large delay reduces the overall system performance from a user's point of view.

It is thus an object of the invention to specify a method for controlling a receiver system and an appropriate receiver system, by which improved clock recovery is possible.

This problem is solved by a method comprising the attributes given in claim 1 and by a receiver system comprising the attributes given in claim 9.

Advantageous embodiments arc given in the dependent claims.

According to the invention, the method comprises the steps of: within said receiver component, detecting a time of a burst packet coming in via said antenna; communicating information about said detection from said receiver component to said host component; transferring data of said burst packet from said receiver component to said host component via a data interconnection; and within said host component, adjusting a playing speed of said player unit according to said information.

Receiver components typically comprise a highly accurate facility for detecting the beginning of an incoming burst due to the need to synchronize with the received signal and to enable time slicing. The invention utilizes this facility for accurately recovering the clock rate of the source encoder by transmitting information about the incoming burst packet to the host component. The host component, in particular the source decoder, is thereby informed about the arrival time of a new burst packet. This way, the invention enables clock recovery in a similar quality as known from transmission protocols that have built-in quality of service features. Thus, latencies in transferring the data and possible jitters can be counterbalanced by adjusting the playing speed of the data for a smooth reproduction of the data without buffer overflows or underruns. The invention substantially helps to optimize the system behaviour with respect to latencies in the system and therefore has a direct impact on perceived performance of the system. Besides, the invention is easy to implement.

In a favourable embodiment of the invention said information comprises an indicator signal that is communicated to said host component via a signal line, indicating said detection. This enables a high accuracy in recovering clocks, because the host component is provided promptly with the information about the arrival of a new burst packet at the receiver component, by-passing the relatively slow data interconnection. Hence, the period of time needed for transferring the data to the host component can be accurately measured by the time difference between the occurrence of the indicator signal and the arrival of the corresponding data at the host component. This measurement can be performed within the host component in order to accurately recover the source encoder clock and to adjust the playing speed of the player unit.

Preferably, the signal line is separate from the data interconnection. In particular, it may be connected to an exclusive or shared interrupt line of the host component. Then, the host component can react to the indicator signal without delay, in particular performing an interrupt service routine.

In an advanced embodiment, after receiving said indicator signal within the host component, an error value is determined from a difference between a current buffer level and a target buffer level, and said playing speed is adjusted according to said error value. This way, a conventional delay lock loop can be realized, which is activated not until the subsequent burst packet has already arrived.

Advantageously, said information comprises a first marker that is inserted into said data at the beginning of said data, wherein this part of said information is communicated to said host component by said transferring of said data via said data interconnection. Hence, the beginning of a burst packet can be identified faster within the data. So the clock recovery can be more accurate. At least a part of said first marker may be a length of said data. At least a part of the information communicated to the host component may be a second marker that is inserted into the data at its end. Hence, the end of a burst packet can be identified faster within the data.

In a preferred embodiment, a processing latency is determined from a difference between a time of receiving said first marker and a time of receiving said indicator signal, and said playing speed is adjusted according to said processing latency. This enables a smooth playing of the A/V data.

Other embodiments are enabled if a clock of said host component is synchronized with a clock of said receiver component, or with a clock source common to both the receiver component and the host component.

In such an embodiment a separate indicator signal can be omitted if the first marker comprises a timestamp representing a time of said detection. However, it is also possible to use both an additional signal line and timestamped markers in combination. Under the precondition of directly or indirectly synchronized receiver and host components, this embodiment allows a high accuracy in recovering clocks.

Preferably, a processing latency is determined from a difference between a current time and said timestamp, and said playing speed is adjusted according to said processing latency. This is a simple way to determine the processing latency and to adjust playing speed without the need for an indicator signal.

In further embodiments for phase shift networks, the playing speed is preferably adjusted considering a time shift between corresponding burst packets of different channels in case of a handover situation.

In another embodiment for phase shift networks, the player unit is started before a target minimum buffer is prepared, and the playing speed is reduced before performing a handover.

While protecting the A/V buffer from running empty, the invention helps system designers on the host/application processor to minimize the latencies at the receiver system.

Specific embodiments of the present invention are described in further detail by way of example with reference to the accompanying drawings, in which:
- Figure 1: shows an exemplary configuration of known receiver systems;
- Figure 2: shows the principle of time slicing in DVB-H;
- Figure 3: shows the principle of phase shift transmissions;
- Figure 4: shows a receiver system having an indicator signal line;
- Figure 5: shows the relative timing of buffer levels, indicator signals and bursts;
- Figure 6: shows the relative timing of buffer levels, indicator signals and bursts after channel switching; and
- Figure 7: shows a receiver system having a common clock source.

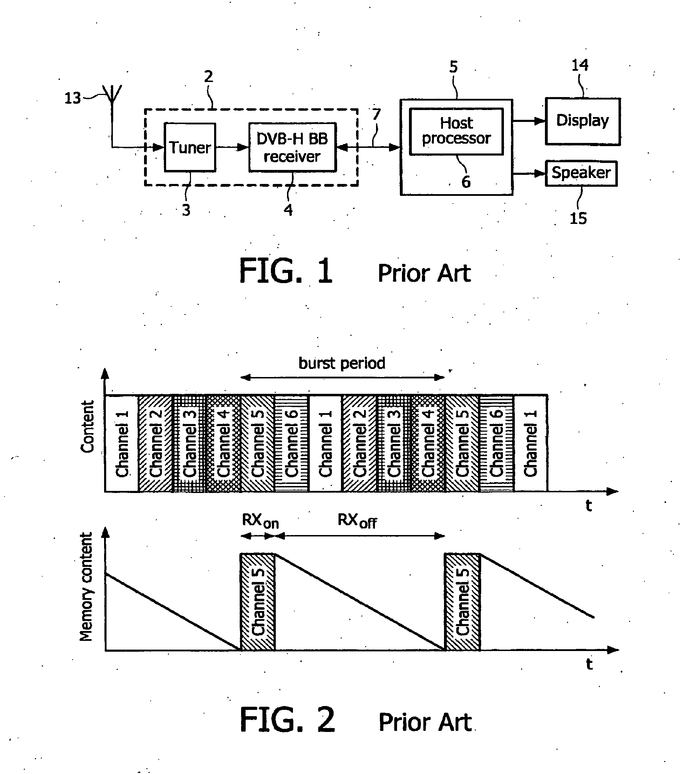

The most typical partitioning of a DVB-H receiver system 1 is shown schematically in Figure 1 in the exemplary form of a cellular phone. A receiver component 2 mainly consisting of a tuner 3 and a DVB-H baseband receiver 4 is connected to the cellular phone's host component 5, comprising the host processor 6 which can also be an application engine, via a data interconnection 7 comprising one of the interfaces typical for this application domain, which are SPI or SDIO. A display 14 and a speaker 15 are connected to the host component 5. The receiver component 2 is responsible for receiving an off-air signal via an antenna 13, recovering the MPEG transport stream, and decapsulating the IP packets. The IP packets are transferred to the host component 5 via the data interconnection 7. The IP encapsulated audio/video contents are brought forward to a media player unit 8 running on the host processor 6, respectively, for decompression, rendering and displaying to the display 14 and the speaker 15. Common video formats are H.264 or Windows Media Video (WMV).

The main principle of time slicing is shown in Figure 2. In this example, a DVB-H multiplex consisting of six channels is transmitted in bursts. Each burst carries IP datagrams. In case of IP encapsulated A/V content each burst contains exactly the amount of data to span the time between the current burst and the next burst, also denoted as burst period. Hence, the receiver system 1 must provide a buffer that allows streaming from local memory, and that is refilled with every new burst. While the receiver system 1 is playing from memory, the tuner 3 and baseband receiver 4 can be completely switched off and power consumption can be saved. In Figure 2, this is illustrated for channel 5.

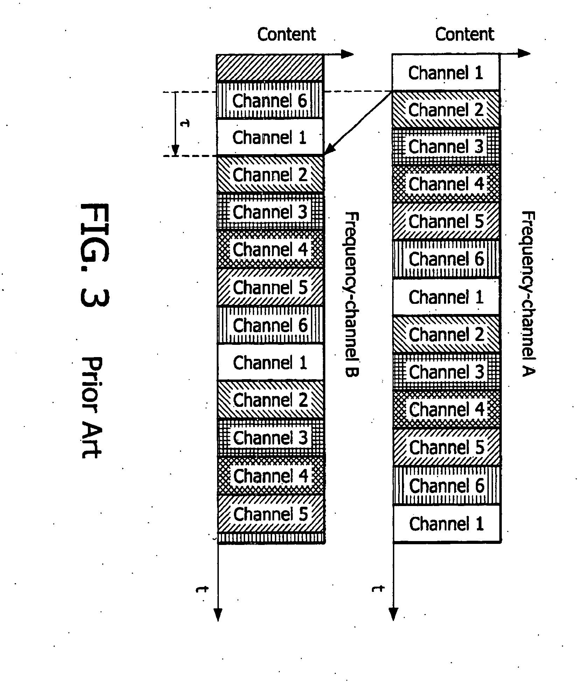

Figure 3 illustrates the principle of phase shifting between two different frequency-channels A and B, respectively. In this example, frequency-channel B is delayed by a phase shift t. A receiver system 1 that wants to hand over from frequency-channel A to frequency-channel B can acquire the timing of the desired burst of in frequency-channel B during the RX_{off} time of frequency-channel A. At a given time that depends on the signal quality parameters, the receiver can seamlessly hand over from frequency-channel A to frequency-channel B without losing a burst of IP datagrams.

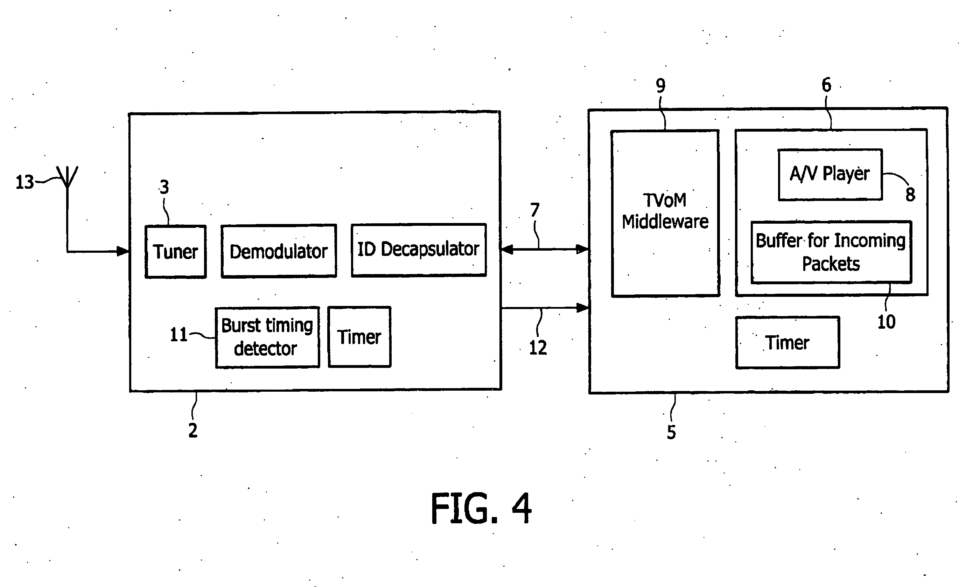

Figure 4 shows a schematic block diagram of an IP datacast based receiver system 1 according to the invention. The receiver component 2 is responsible for receiving an off-air signal that is used for IP datacasting, such as DVB-H. The receiver component 2 acquires the signal, demodulates it, and decapsulates the IP packets which are then forwarded to the host component 5. The host component comprises appropriate middleware 9 for retrieving the electronic service guide. For each program, the electronic service guide holds information on the parameters used to encode the program including bit rate and mapping to IP addresses. IP packets that carry A/V content of the selected program are forwarded from the receiver component 2 to the A/V player unit 8 where they arrive in a buffer 10 for incoming packets. The A/V player unit 8 plays from this buffer 10.

According to the invention, the receiver component 2 has built in a precise timing detector 11 to detect the beginning of a received burst. Typically, this kind of timing information is available somewhere inside the receiver component 2 due to the need to synchronize with the received signal and to enable time slicing, i.e. switch off the receiver component 2 while unneeded data are transmitted. It can thus be used for the benefit of the invention.

In the shown receiver system 1, clock recovery is facilitated by means of a hard-wired indicator signal 12 indicating the detection of the beginning of a burst. For each burst that is detected, either immediately when it arrives at the antenna 13 or with a fixed latency after it has arrived at the antenna 13, the receiver component 2 sets the indicator signal 12, e.g., from a logical low value to a high value. This low-high edge triggers the host component 5, e.g., by a means of an interrupt and a corresponding interrupt service routine, immediately to acquire the current buffer level. A conventional delay lock loop can then be used to control the playing speed of the A/V player unit 8: The acquired buffer level is compared to a predefined target value by calculating the difference between the buffer level and the target value. The calculated difference is referred to as an error signal. If the value is larger than zero, the player unit 8 is told to reduce its playing speed, since the buffer level is larger than the target value. If the error signal is negative, the player unit 8 is told to increase its playing speed. In order to reduce jitter, the error signal can be lowpass filtered. Furthermore, the absolute value of the lowpass filtered error signal can be determined in such a way that it expresses the amount about which the playing speed needs to be adjusted. Additional means can be applied to limit the error signal or to control the playing speed variations to prevent them from becoming audible or visible.

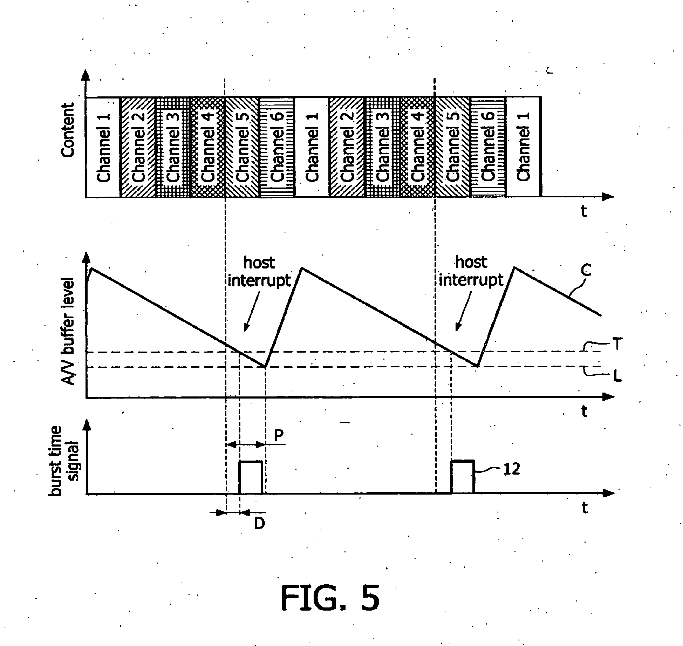

The timing relationships during such a procedure are shown in Figure 5. After a constant delay D since the time a burst has arrived at the antenna 13, the indicator signal 12 raises from low to high thereby issuing an interrupt at the processor 6 of the host component 5, hosting the A/V player unit 8. Thereupon, the host component 5 acquires the current A/V buffer level C and compares it with the predefined target buffer level T, starting a delay lock loop. By adjusting the playing speed of the player unit unit 8, the receiver system 1 prevents the A/V buffer's 10 lowest buffer level L from reaching zero due to processing latencies P and time-slicing jitter. On the contrary, the invention allows dimensioning the lowest buffer level L such that latencies are kept to a minimum keeping channel switching times to a minimum.

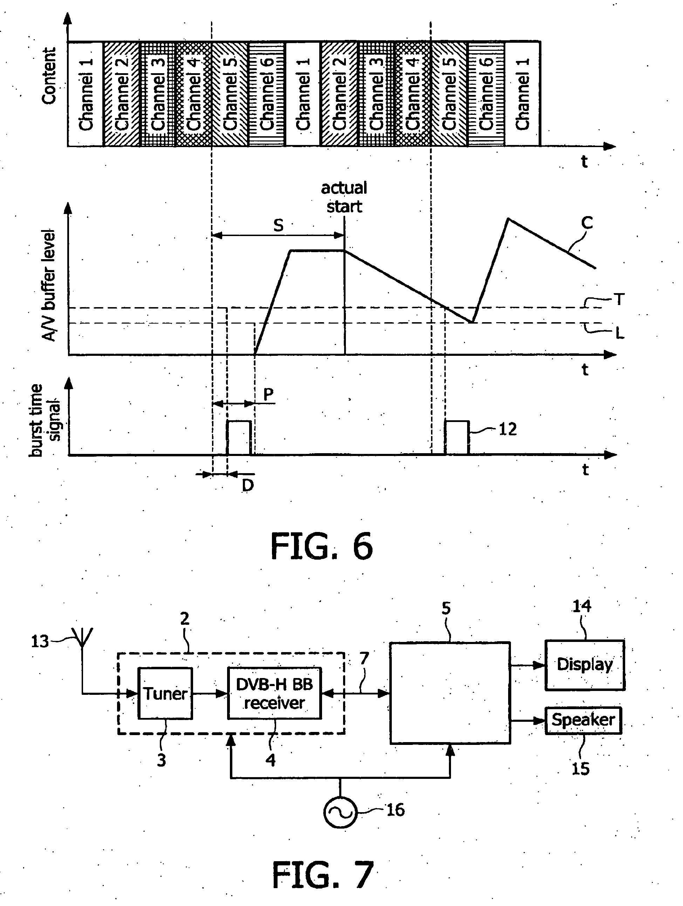

Figure 6 shows a case of channel switching. For channel switching, a fixed starting delay S in relation to the reception of the indicator signal 12 can be introduced after which the player unit 8 starts playing. Note that the delayed start sets the initial lowest buffer level L inside the A/V player unit 8. In this example, a user selects channel 5. The indicator signal 12 rises from low to high, indicating the beginning of the received burst. After some processing latency P, data are transferred to the host component 5 and IP datagrams with A/V content are forwarded to the A/V player unit 8 and its current buffer level C is increased. The actual play command to the player unit 8 is issued with a fixed starting delay S from the indicator signal 12.

The procedure as described above can also be used for networks that provide means for MPEG transport stream phase shift handover, to ensure that always enough data are present in the A/V buffer. In this case, the target buffer level T needs to be set to a value that ensures a lowest buffer level L large enough to accommodate the phase shift that can occur during handover. This prevents the A/V buffer 10 from running empty when a burst is received later after the handover. When a burst from a different frequency is received later (earlier) automatically the buffer 10 is built up to the target buffer level T again by reducing (increasing) the playing speed of the player unit 8.

A specific combination of buffer control is able to optimize for both, low latency after channel switching and sufficient buffer margin for handover in an MPEG transport stream phase shift network. Hereby it is assumed that after channel switching, the device will not immediately handover. In this case, referring to Figure 6, the constant starting delay S is kept to a value large enough to ensure that the A/V buffer 10 does not run empty when the frequency is not switched. However, the target buffer level T is set significantly higher, such that over the next period, the A/V player unit 8 plays with a decreased playing speed and the buffer 10 is built up to allow for phase shift MPEG transport stream handover.

Figure 7 shows a case where the clocks for the receiver component 2 and the host component 5 are synchronized by a single clock providing a common system clock source 16 to both components 2, 5. Another possibility not shown is to synchronize the components 2, 5 explicitly with each other. In both cases, the indicator signal 12 can be omitted.

The common system clock source 16 ensures that timers in the receiver component 2, in particular in the DVB-H baseband receiver 4, and the host/application processor 6 run with related clock frequencies. In order to fully synchronize those timers a hard-wired synchronisation signal from the baseband receiver 4 to the host component 5 can be introduced that is used to initially deliver a specific time instant for which a specific timer value is delivered in a subsequent message to the host component 5, or a hard-wired synchronisation signal from the host component 5 to the baseband receiver 4 that notifies the baseband receiver 4 to set its timer to an initial value. After the timers in the baseband receiver 4 and the host component 5 are synchronous, the baseband receiver 4 can notify the host component 5 about the arrival of bursts by associating the timer value to the transfer of each burst. In this case, a burst transfer needs to be clearly marked, e.g. by burst start and end markers, or by a burst start marker comprising the data length, and a timestamp that refers to the burst.

The invention is applicable to all IP datacast receiver systems 1 where some sort of bursting is used in the network transmission. Therefore, the applicability of the invention is not limited to DVB-H only, but it can also be used for systems like DXB ("Digital Extended Broadcast") or T-DMB ("Terrestrial Digital Multimedia Broadcasting").

### List of reference numerals

- 1: Receiver system
- 2: Receiver component
- 3: Tuner
- 4: Baseband receiver
- 5: Host component
- 6: Host processor
- 7: Data interconnection
- 8: Player
- 9: Middleware
- 10: Buffer
- 11: Timing detector
- 12: Indicator signal
- 13: Antenna
- 14: Display
- 15: Speaker
- 16: Common system clock source

- C: Current buffer level
- D: Constant delay
- L: Lowest buffer level
- P: Processing latency
- T: Target buffer level
- t: Phase shift.

## Claims

1. A method for controlling a receiver system, in particular for wireless IP datacast networks, the receiver system comprising a receiver component (2) with an antenna (13), and a host component (5) with a player unit (8) having a buffer (10),
the method comprising the following steps:
- within said receiver component (2), detecting a time of a burst packet coming in via said antenna (13); and
- transferring data of said burst packet from said receiver component (2) to said host component (5) via a data interconnection (7),
the method **characterised by** further comprising:
- communicating information about said detection from said receiver component (2) to said host component (5), wherein said information comprises an indicator signal (12) that is communicated to said host component (5) via a signal line, indicating said detection
; and
- measuring the time difference between the occurrence of the indicator signal (12) and the arrival of the data of said burst packet at the host component (5) and, within said host component (5), adjusting a playing speed of said player unit (8) according to said time difference.

2. The method according to claim 1, wherein, after receiving said indicator signal (12) within the host component (5), an error value is determined from a difference between a current buffer level (C) and a target buffer level (T), and said playing speed is adjusted according to said error value.

3. The method according to one of the claims 1 or 2, wherein said information further comprises a first marker that is inserted into said data at the beginning of said data, wherein this part of said information is communicated to said host component (5) by said transferring of said data via said data interconnection (7).

4. The method according to claim 3, wherein a processing latency (P) is determined from a difference between a time of receiving said first marker and a time of receiving said indicator signal (12), and said playing speed is adjusted according to said processing latency (P).

5. The method according to claim 3, wherein a clock of said host component (5) is synchronized with a clock of said receiver component (2), or with a clock source common to both the receiver component (2) and the host component (5).

6. The method according to claim 5, wherein said first marker comprises a timestamp representing a time of said detection.

7. The method according to one of the preceding claims, wherein, in case of a handover situation in a phase shift network, said playing speed is adjusted considering a time shift (t) between corresponding burst packets of different channels of said phase shift network.

8. The method according to one of the preceding claims, wherein, in case of a handover situation in a phase shift network, said player unit is started before a target minimum buffer is prepared, and said playing speed is reduced before performing said handover.

9. A receiver system, in particular for wireless IP datacast networks, comprising a receiver component (2) with an antenna (13), and a host component (5), wherein:
- said receiver component (2) detects a time of a burst packet coming in via said antenna (13); and
- said receiver component (2) transfers data of said burst packet to said host component (5) via a data interconnection (7),
- said host component (5) comprises a player unit (8) having a buffer (10), and the receiver system **characterised in that**:
- said receiver component (2) communicates information about said detection to said host component (5), wherein said receiver component (2) communicates an indicator signal (12) to said host component (5) via a signal line, wherein said indicator signal (12) is at least a part of said information; and
- said host component (5) adjusts a playing speed of said player unit (8) according to a time difference measured between the occurrence of the indicator signal (12) and the arrival of the data of said burst packet at the host component (5).

10. The receiver system according to claim 9, wherein said signal line is connected to an interrupt line of said host component (5).

11. The receiver system according to claim 9 or 10, wherein said host component (5), after receiving said indicator signal (12), determines an error value from a difference between a current buffer level (C) and a target buffer level (T), and adjusts said playing speed according to said error value.

12. The receiver system according to one of the claims 9 to 11, wherein the receiver component (2) inserts a first marker into said data at the beginning of said data as at least a part of said information, and communicates this part of said information to said host component (5) via said data interconnection (7).

13. The receiver system according to claim 12, wherein the host component (5) determines a processing latency (P) from a difference between a time of receiving said first marker and a time of receiving said indicator signal (12), and adjusts said playing speed according to said processing latency (P).

14. The receiver system according to claim 12, wherein a clock of said host component (5) is synchronized with a clock of said receiver component (2).

15. The receiver system according to claim 12, comprising a common clock source (16) for both the receiver component (2) and the host component (5).

16. The receiver system according to claim 14 or 15, wherein said first marker comprises a timestamp representing a time of said detection.

## Patentansprüche

1. Ein Verfahren zum Steuern eines Empfängersystems, insbesondere für drahtlose IP Datacast Netzwerke, wobei das Empfängersystem eine Empfängerkomponente (2) mit einer Antenne (13) und eine Hostkomponente (5) mit einer Abspieleinheit (8) aufweist, welche einen Puffer (10) hat, wobei das Verfahren die folgenden Schritte aufweist:
- innerhalb der Empfängerkomponente (2), Detektieren einer Zeit von einem Burst Paket, das via die Antenne (13) eintrifft; und
- Übertragen von Daten des Burst Pakets aus der Empfängerkomponente (2) zu der Hostkomponente (5) via eine Datenverbindung (7),
wobei das Verfahren **dadurch gekennzeichnet ist, dass** es ferner aufweist:
- Kommunizieren einer Information über die Detektion von der Empfängerkomponente (2) zu der Hostkomponente (5), wobei die Information ein Indikatorsignal (12) aufweist, welches zu der Hostkomponente (5) via eine Signalleitung kommuniziert wird, welches die Detektion indiziert; und
Messen der Zeitdifferenz zwischen dem Auftreten des Indikatorsignals (12) und dem Eintreffen der Daten des Burst Pakets bei der Hostkomponente (5); und
innerhalb der Hostkomponente (5), Einstellen einer Abspielgeschwindigkeit der Abspieleinheit (8) gemäß der Zeitdifferenz.

2. Das Verfahren gemäß Anspruch 1, wobei nach dem Empfangen des Indikatorsignals (12) innerhalb der Hostkomponente (5) ein Fehlerwert bestimmt wird aus einer Differenz zwischen einem gegenwärtigen Pufferpegel (C) und einem Zielpufferpegel (T), und die Abspielgeschwindigkeit gemäß dem Fehlerwert eingestellt wird.

3. Das Verfahren gemäß einem der Ansprüche 1 oder 2, wobei die Information ferner ein erstes Kennzeichen aufweist, welches bei dem Beginn der Daten in die Daten eingefügt wird, wobei dieser Teil der Information zu der Hostkomponente (5) kommuniziert wird, mittels des Übertragens der Daten via die Datenverbindung (7).

4. Das Verfahren gemäß Anspruch 3, wobei eine Verarbeitungslatenz (P) bestimmt wird aus einer Differenz zwischen einer Empfangszeit des ersten Kennzeichens und einer Empfangszeit des Indikatorsignals (12), und wobei die Abspielgeschwindigkeit gemäß der Verarbeitungslatenz (P) eingestellt wird.

5. Das Verfahren gemäß Anspruch 3, wobei ein Takt der Hostkomponente (5) synchronisiert wird mit einem Takt der Empfängerkomponente (2) oder mit einer Taktquelle, die gemeinsam ist für die Empfängerkomponente (2) und die Hostkomponente (5).

6. Das Verfahren gemäß Anspruch 5, wobei das erste Kennzeichen einen Zeitstempel aufweist, welcher eine Detektionszeit repräsentiert.

7. Das Verfahren gemäß einem der vorangehenden Ansprüche, wobei im Fall einer Übergabesituation in einem Phasenverschiebungsnetzwerk die Abspielgeschwindigkeit unter Berücksichtigung einer Zeitverschiebung (t) zwischen korrespondierenden Burst Paketen von verschiedenen Kanälen des Phasenverschiebungsnetzwerks eingestellt wird.

8. Das Verfahren gemäß einem der vorangehenden Ansprüche, wobei im Fall einer Übergabesituation in einem Phasenverschiebungsnetzwerk die Abspieleinheit gestartet wird, bevor ein Zielminimumpuffer vorbereitet wird, und die Abspielgeschwindigkeit vor dem Durchführen der Übergabe reduziert wird.

9. Ein Empfängersystem, insbesondere für drahtlose IP Datacast Netzwerke, aufweisend eine Empfängerkomponente (2) mit einer Antenne (13), und
eine Hostkomponente (5), wobei
- die Empfängerkomponente (2) eine Zeit von einem Burst Paket, das via die Antenne (13) eintrifft, detektiert; und
- die Empfängerkomponente (2) Daten des Burst Pakets zu der Hostkomponente (5) via eine Datenverbindung (7) überträgt,
- die Hostkomponente (5) eine Abspieleinheit (8) aufweist, welche einen Puffer (10) hat, und wobei das Empfängersystem **dadurch gekennzeichnet ist, dass**:
- die Empfängerkomponente (2) eine Information über die Detektion zu der Hostkomponente (5) kommuniziert, wobei die Empfängerkomponente (2) ein Indikatorsignal (12) zu der Hostkomponente (5) via eine Signalleitung kommuniziert, wobei das Indikatorsignal (12) zumindest ein Teil der Information ist; und
- die Hostkomponente (5) eine Abspielgeschwindigkeit der Abspieleinheit (8) gemäß einer Zeitdifferenz einstellt, welche zwischen dem Auftreten des Indikatorsignals (12) und dem Eintreffen der Daten des Burst Pakets bei der Hostkomponente (5) gemessen wird.

10. Das Empfängersystem gemäß Anspruch 9, wobei die Signalleitung mit einer Interruptleitung der Hostkomponente (5) verbunden ist.

11. Das Empfängersystem gemäß Anspruch 9 oder 10, wobei die Hostkomponente (5) nach dem Empfangen des Indikatorsignals (12) einen Fehlerwert bestimmt aus einer Differenz zwischen einem gegenwärtigen Pufferpegel (C) und einem Zielpufferpegel (T), und die Abspielgeschwindigkeit gemäß dem Fehlerwert einstellt.

12. Das Empfängersystem gemäß einem der Ansprüche 9 bis 11, wobei die Empfängerkomponente (2) bei dem Beginn der Daten ein erstes Kennzeichen in die Daten einfügt, als zumindest ein Teil der Information, und diesen Teil der Information via die Datenverbindung (7) zu der Hostkomponente (5) kommuniziert.

13. Das Empfängersystem gemäß Anspruch 12, wobei die Hostkomponente (5) eine Verarbeitungslatenz (P) bestimmt aus einer Differenz zwischen einer Empfangszeit des ersten Kennzeichens und einer Empfangszeit des Indikatorsignals (12), und die Abspielgeschwindigkeit gemäß der Verarbeitungslatenz (P) einstellt.

14. Das Empfängersystem gemäß Anspruch 12, wobei ein Takt der Hostkomponente (5) mit einem Takt der Empfängerkomponente (2) synchronisiert wird.

15. Das Empfängersystem gemäß Anspruch 12, aufweisend eine gemeinsame Taktquelle (16) für sowohl die Empfängerkomponente (2) als auch die Hostkomponente (5).

16. Das Empfängersystem gemäß Anspruch 14 oder 15, wobei das erste Kennzeichen einen Zeitstempel aufweist, welcher eine Detektionszeit repräsentiert.

## Revendications

1. Procédé de commande d'un système récepteur, notamment pour des réseaux de diffusion de données IP sans fil, le système récepteur comprenant un composant récepteur (2) muni d'une antenne (13, et un composant hôte (5) muni d'une unité de lecture (8) comportant un tampon (10), le procédé comprenant les étapes suivantes:
- dans ledit composant récepteur (2), la détection d'un temps d'un paquet de salve obtenu en entrée via ladite antenne (13); et
- le transfert de données dudit paquet de salve dudit composant récepteur (2) audit composant hôte (5) via une interconnexion de données (7), le procédé étant **caractérisé en ce qu'**il comprend en outre:
- la transmission d'informations concernant ladite détection dudit composant récepteur (2) audit composant hôte (5), dans lequel lesdites informations comprennent un signal indicateur (12) qui est transmis audit composant hôte (5) via un ligne de signal, indiquant ladite détection; et
- la mesure de la différence de temps entre l'apparition du signal indicateur (12) et l'arrivée des données dudit paquet de salve au niveau du composant hôte (5) et, dans ledit composant hôte (5), l'ajustement d'une vitesse de lecture de ladite unité de lecture (8) conformément à ladite différence de temps.

2. Procédé selon la revendication 1, dans lequel, après la réception dudit signal indicateur (12) dans le composant hôte (5), une valeur d'erreur est déterminée à partir d'une différence entre un niveau de tampon courant (C) et un niveau de tampon cible (T), et ladite vitesse de lecture est ajustée conformément à ladite valeur d'erreur.

3. Procédé selon l'une des revendications 1 ou 2, dans lequel lesdites informations comprennent en outre un premier marqueur qui est inséré dans lesdites données au début desdites données, dans lequel cette partie desdites informations est transmise audit composant hôte (5) par ledit transfert desdites données via ladite interconnexion de données (7).

4. Procédé selon la revendication 3, dans lequel une latence de traitement (P) est déterminée à partir d'une différence entre un temps de réception dudit premier marqueur et un temps de réception dudit signal indicateur (12), et ladite vitesse de lecture est ajustée conformément à ladite latence de traitement (P).

5. Procédé selon la revendication 3, dans lequel une horloge dudit composant hôte (5) est synchronisée avec une horloge dudit composant récepteur (2) ou avec une source d'horloge commune à la fois au composant récepteur (2) et au composant hôte (5).

6. Procédé selon la revendication 5, dans lequel ledit premier marqueur comprend un marqueur temporel représentant un temps de ladite détection.

7. Procédé selon l'une des revendications précédentes, dans lequel, dans le cas d'une situation de transfert intercellulaire dans un réseau à déphasage, ladite vitesse de lecture est ajustée en tenant compte d'un décalage de temps (t) entre des paquets de salve correspondants de différents canaux dudit réseau à déphasage.

8. Procédé selon l'une des revendications précédentes, dans lequel, dans le cas d'une situation de transfert intercellulaire dans un réseau à déphasage, ladite unité de lecture est mise en fonctionnement avant qu'un tampon minimum cible soit préparé, et ladite vitesse de lecture est réduite avant l'exécution dudit transfert intercellulaire.

9. Système récepteur, notamment pour des réseaux de diffusion de données IP sans fil, comprenant un composant récepteur (2) muni d'une antenne (13) et un composant hôte (5), dans lequel:
- ledit composant récepteur (2) détecte un temps d'un paquet de salve obtenu en entrée via ladite antenne (13) ; et
- ledit composant récepteur (2) transfère des données dudit paquet de salve audit composant hôte (5) via une interconnexion de données (7),
- ledit composant hôte (5) comprend une unité de lecture (8) comportant un tampon (10), et le système récepteur est **caractérisé en ce que**:
- ledit composant récepteur (2) transmet des informations concernant ladite détection audit composant hôte (5), dans lequel ledit composant récepteur (2) transmet un signal indicateur (12) audit composant hôte (5) via un ligne de signal, dans lequel ledit signal indicateur (12) fait au moins partie desdites informations; et
- ledit composant hôte (5) ajuste une vitesse de lecture de ladite unité de lecture (8) conformément à une différence de temps mesurée entre l'apparition du signal indicateur (12) et l'arrivée des données dudit paquet de salve au niveau du composant hôte (5).

10. Système récepteur selon la revendication 9, dans lequel ladite ligne de signal est connectée à une ligne d'interruption dudit composant hôte (5).

11. Système récepteur selon la revendication 9 ou 10, dans lequel ledit composant hôte (5), après la réception dudit signal indicateur (12), détermine une valeur d'erreur à partir d'une différence entre un niveau de tampon courant (C) et un niveau de tampon cible (T), et ajuste ladite vitesse de lecture conformément à ladite valeur d'erreur.

12. Système récepteur selon l'une des revendications 9 à 11, dans lequel le composant récepteur (2) insère un premier marqueur dans lesdites données au début desdites données en tant qu'au moins une partie desdites informations, et transmet cette partie desdites informations audit composant hôte (5) via ladite interconnexion de données (7).

13. Système récepteur selon la revendication 12, dans lequel le composant hôte (5) détermine une latence de traitement (P) à partir d'une différence entre un temps de réception dudit premier marqueur et un temps de réception dudit signal indicateur (12), et ajuste ladite vitesse de lecture conformément à ladite latence de traitement (P).

14. Système récepteur selon la revendication 12, dans lequel une horloge dudit composant hôte (5) est synchronisée avec une horloge dudit composant récepteur (2).

15. Système récepteur selon la revendication 12, comprenant une source d'horloge commune (16) à la fois pour le composant récepteur (2) et le composant hôte (5).

16. Système récepteur selon la revendication 14 ou 15, dans lequel ledit premier marqueur comprend un marqueur temporel représentant un temps de ladite détection.
